(19) Europäisches Patentamt / European Patent Office / Office européen des brevets

(11) **EP 4 199 454 B1**

(12) **FASCICULE DE BREVET EUROPEEN**

(45) Date de publication et mention de la délivrance du brevet:
**14.08.2024 Bulletin 2024/33**

(21) Numéro de dépôt: **22213150.0**

(22) Date de dépôt: **13.12.2022**

(51) Classification Internationale des Brevets (IPC):
*H04L 41/142* (2022.01)   *H04L 41/0816* (2022.01)
*H04L 41/12* (2022.01)   *H04L 43/04* (2022.01)
*H04L 43/08* (2022.01)

(52) Classification Coopérative des Brevets (CPC):
**H04L 41/142;** H04L 41/0816; H04L 41/12;
H04L 43/04; H04L 43/08

(54) **PROCÉDÉ ET SYSTÈME DE DÉTECTION D'INCIDENTS DANS AU MOINS UN RÉSEAU LOCAL DE COMMUNICATION**

VERFAHREN UND SYSTEM ZUR ERKENNUNG VON EREIGNISSEN IN MINDESTENS EINEM LOKALEN KOMMUNIKATIONSNETZWERK

METHOD AND SYSTEM FOR DETECTING FAULTS IN AT LEAST ONE LOCAL COMMUNICATION NETWORK

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **16.12.2021 FR 2113667**

(43) Date de publication de la demande:
**21.06.2023 Bulletin 2023/25**

(73) Titulaire: **Sagemcom Broadband SAS**
**92270 Bois-Colombes (FR)**

(72) Inventeurs:
• **BEN HAMIDA, Elyes**
**92500 RUEIL MALMAISON (FR)**
• **KOLLER, Laurent**
**92500 RUEIL MALMAISON (FR)**
• **LIN, Johny**
**92500 RUEIL MALMAISON (FR)**

(74) Mandataire: **Cabinet Le Guen Maillet**
**3, impasse de la Vigie**
**CS 71840**
**35418 Saint-Malo Cedex (FR)**

(56) Documents cités:
**US-A1- 2010 027 432**     **US-A1- 2020 267 057**

## Description

DOMAINE TECHNIQUE

La présente invention concerne la supervision de réseaux locaux à distance.

ETAT DE LA TECHNIQUE ANTERIEURE

Les réseaux locaux à l'origine principalement implantés dans des entreprises se sont développés de manière très importante dans les habitations. Ces réseaux locaux, qu'ils soient filaires et/ou sans fils permettent à des usagers d'accéder aux services proposés par des réseaux étendus tels que par exemple le réseau internet.

Les services sont par exemple proposés par des fournisseurs d'accès internet qui en outre fournissent au moins en partie les différents éléments qui permettent la constitution du réseau local.

Lorsqu'un incident survient dans un réseau local, les usagers de ce réseau local font appel aux services techniques de l'opérateur afin que l'incident soit solutionné. Pour se différencier et capter plus de valeur dans ce marché hautement concurrentiel, les fournisseurs d'accès internet doivent offrir la meilleure expérience numérique à domicile en étant capables de rapidement diagnostiquer un incident et de pouvoir résoudre celui-ci le plus rapidement possible.

Le diagnostic et la résolution d'un incident à distance offrent cette rapidité.

Néanmoins, la résolution d'incidents à distance nécessite d'obtenir des réseaux locaux une quantité importante de données. La collecte et le traitement de ces données par des serveurs situés dans un nuage informatique (« CLOUD » en anglais) augmentent proportionnellement avec le nombre de réseaux locaux à surveiller. Lorsque le nombre de réseaux locaux à superviser devient important, la quantité de serveurs nécessaires à la supervision des réseaux locaux devient importante et le provisionnement des ressources informatiques nécessaire à la supervision et la génération de messages de recommandations ou d'actions correctives devient alors difficile à mettre en oeuvre.

La demande de brevet US 2020/267057 divulgue des techniques pour résumer, diagnostiquer et corriger la cause d'un comportement anormal dans des systèmes informatiques.

La présente invention vise à permettre une supervision d'un nombre important de réseaux locaux à distance tout en évitant de devoir déployer une infrastructure importante au sein du nuage informatique.

EXPOSE DE L'INVENTION

A cette fin, selon un premier aspect, l'invention propose un procédé de détection d'incidents dans un réseau local par un dispositif de détection d'incidents selon la revendication 1.

L'invention concerne aussi un dispositif de conditionnement et de traitement de selon la revendication 9.

Ainsi, la présente invention permet de diagnostiquer rapidement un incident et de pouvoir résoudre celui-ci le plus rapidement possible à distance tout en évitant de devoir déployer une infrastructure importante au sein d'un nuage informatique.

Selon un mode particulier de l'invention, le référentiel de traitement est déterminé par le dispositif de détection d'incidents à partir des caractéristiques du dispositif de conditionnement et de traitement de données telles que par exemple les performances en puissance de calcul et/ou en capacité de stockage de données du dispositif de conditionnement et de traitement de données.

Selon un mode particulier de l'invention, le référentiel de traitement est déterminé par le dispositif de détection d'incidents en outre en fonction d'un score de santé du réseau local déterminé par le dispositif de détection d'incidents à partir des données agrégées.

Selon un mode particulier de l'invention, le dispositif de détection d'incidents :

- calcule sur l'ensemble des scores de sévérité totale des groupes de données agrégés pendant une durée prédéterminée d'un score de criticité totale, la durée prédéterminée étant telle qu'une pluralité de groupes de données sont agrégés pendant la durée prédéterminée,
- génère des messages de recommandations ou d'actions correctives au moins à partir du score de criticité totale.

Selon un mode particulier de l'invention, le dispositif de détection d'incidents calcule la moyenne des scores de sévérités totales pondérés par la durée des groupes des données pour obtenir le score de santé du réseau local.

Selon un mode particulier de l'invention, les recommandations ou actions correctives sont en outre générées à partir du score de santé totale.

Selon un mode particulier de l'invention, les données sont agrégées en partitionnant les données selon une périodicité prédéterminée, si, dans une partition, aucun changement de caractéristique de fonctionnement d'un lien n'apparaît, un groupe de données est formé, le groupe de données comprenant l'ensemble des données de la partition et dans chaque partition, à chaque changement d'au moins une caractéristique de fonctionnement d'un lien , un groupe de données est formé, qui comprend les données de la partition correspondant à la caractéristique de fonctionnement du lien.

Selon un mode particulier de l'invention, les recommandations sont des invitations à rapprocher une station d'un noeud du réseau local ou à ajouter un noeud dans le réseau local ou à déplacer un noeud du réseau local ou à modifier un canal à utiliser ou à modifier des seuils d'algorithmes locaux qui engendrent les changements de canaux ou à supprimer des sources de bruit ou à restaurer une configuration du protocole de communication et les actions correctives sont des modification de canaux ou des modifications de seuils d'algorithmes locaux qui engendrent les changements de canaux.

La présente invention concerne aussi un système de détection d'incidents dans un réseau local par le dispositif de détection d'incidents.

La présente invention concerne aussi un produit programme d'ordinateur. Il comprend des instructions pour implémenter, par un dispositif, le procédé selon l'un des modes de réalisation précédents, lorsque ledit programme est exécuté par un processeur du dispositif.

La présente invention concerne aussi un support de stockage. Il stocke un programme d'ordinateur comprenant des instructions pour implémenter, par un dispositif, le procédé selon l'un des modes de réalisation précédents, lorsque ledit programme est exécuté par un processeur du dispositif.

BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

[Fig. 1] illustre schématiquement un système de télécommunication comprenant un mode de réalisation ;
[Fig. 2] illustre schématiquement un exemple d'architecture matérielle d'un dispositif de détection d'incidents dans au moins un réseau local ;
[Fig. 3] illustre schématiquement un exemple d'architecture matérielle d'un dispositif de conditionnement et de traitement de données pour la détection d'incidents dans un réseau local ;
[Fig. 4] illustre schématiquement un exemple d'agrégation de données selon un mode de réalisation ;
[Fig. 5] illustre le principe de calcul de la criticité d'un incident par un module de détection d'incidents et de calcul de scores de criticité ;
[Fig. 6] illustre schématiquement un procédé de conditionnement et de traitement de données pour la détection d'incidents dans un réseau local ;
[Fig. 7] illustre schématiquement un procédé de détection d'incidents dans un réseau local.

EXPOSE DETAILLE DE MODES DE REALISATION

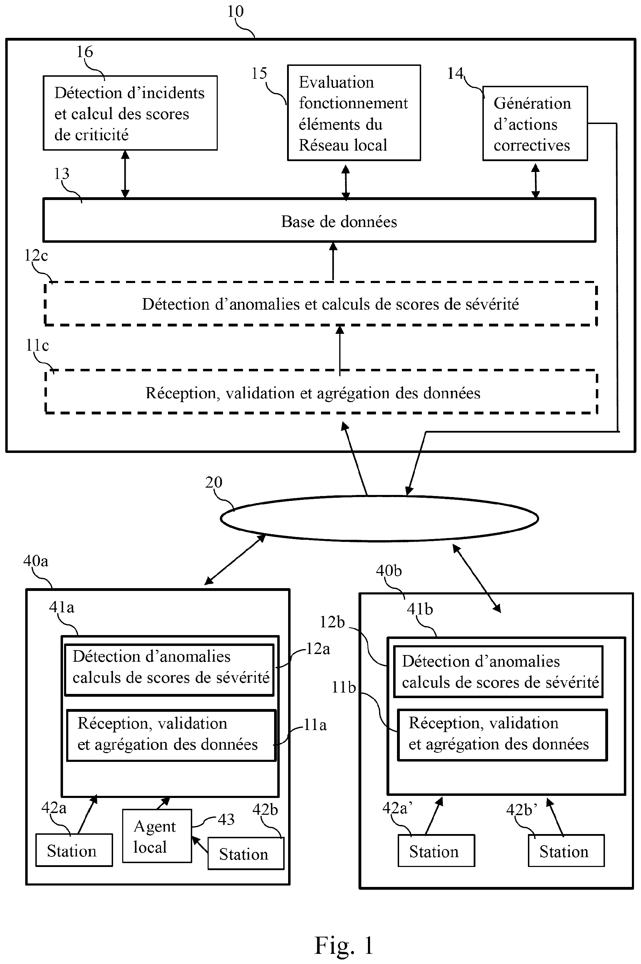

La Fig. 1 illustre schématiquement un système de télécommunication comprenant un mode de réalisation.

Dans la Fig. 1, un dispositif de détection d'incidents 10 est relié par l'intermédiaire d'un réseau étendu 20 (Wide Area Network en anglais) à des réseaux locaux 40 (LAN en anglais). Par exemple les réseaux locaux 40 sont des réseaux domestiques filaires et/ou sans fils. Seulement deux réseaux domestiques 40a et 40b sont représentés en Fig. 1 par souci de simplification. Dans un exemple particulier, les réseaux locaux 40a et 40b sont des réseaux sans fils de type Wi-Fi.

Dans l'exemple de la Fig. 1, un seul dispositif de détection d'incidents 10 est représenté. Le dispositif de détection d'incidents est dans un nuage informatique appelé CLOUD en anglais. Les différents éléments constitutifs du dispositif de détection d'incidents 10 peuvent être répartis dans différents dispositifs informatiques compris dans le nuage informatique.

Le réseau étendu 20 est par exemple un réseau de type internet.

Dans l'exemple de la Fig. 1, le réseau local 40a comporte deux stations 42a, 42b, un agent de collecte 43 et un point d'accès ou noeud relié au réseau étendu qui fait office de dispositif de conditionnement et de traitement de données 41a pour la détection d'incidents dans le réseau local 40a.

Il est entendu ci-après par le terme « noeud », un équipement offrant des capacités de connectivité et constitutif du réseau local 40a. Un noeud est par exemple une passerelle résidentielle ou « gateway », un point d'accès ou « access point », un routeur Ethernet intelligent, un « extender » sans-fil, etc.

Il est entendu ci-après par le terme « station », un équipement fixe ou mobile utilisant les ressources du réseau local via l'intermédiaire des noeuds dudit réseau local. Une station est par exemple un terminal mobile sans-fil, une imprimante avec connectivité Ethernet, une enceinte sans-fil...

L'agent de collecte 43 transfère les données collectées au dispositif de conditionnement et de traitement de données 41a.

Le réseau local 40b comporte deux stations 42a', 42b' et un point d'accès relié au réseau étendu qui fait office de dispositif de conditionnement et de traitement de données 41b pour la détection d'incidents dans le réseau local 40b.

Les points d'accès sont par exemple des passerelles entre le réseau étendu 20 et les réseaux locaux 40a ou 40b.

Il est à remarquer ici que chaque noeud peut collecter des données dans le réseau local 40a ou 40b.

Par exemple, l'agent de collecte 43 est implémenté dans un noeud et collecte des données dans le réseau local 40a.

L'implantation du point d'accès, et des stations dans un logement peut être génératrice d'incidents, comme la taille, la constitution du logement, et le nombre de stations.

De même, dans un réseau local sans fil compatible avec l'une des normes de la famille de standards IEEE 802.11, parfois désignée technologie de type Wi-Fi, des interférences avec des réseaux adjacents ou des dispositifs émettant des ondes radio électriques dans une même bande de fréquence peuvent apparaître.

L'utilisation dans un même réseau local de plusieurs services tels que la lecture en continu (streaming en anglais), la domotique, la télévision sur internet, les jeux en ligne, l'internet des objets, etc. peut aussi perturber certains de ces services.

Chaque dispositif de conditionnement et de traitement de données 41a ou 41b obtient des données descriptives des connexions entre des stations et des noeuds du réseau local 40a ou 40b et des données descriptives des connexions entre les noeuds liées à la qualité et à l'usage du réseau local. Ces données sont collectées à intervalles réguliers et sont stockées localement au niveau de chaque noeud. Ces données sont ensuite envoyées, à intervalles réguliers par chaque noeud au dispositif de conditionnement et de traitement de données.

Chaque dispositif de conditionnement et de traitement de données 41a ou 41b, selon un référentiel de traitement reçu par chaque dispositif de conditionnement et de traitement de données 41a ou 41b du dispositif de détection d'incidents 10, traite ces données. Les résultats de ces traitements sont envoyés au dispositif de détection d'incidents 10.

Les données collectées sont par exemple mais non limitativement, la liste des noeuds du réseau local et leurs fonctions, par exemple, passerelle internet, répéteur Wi-Fi, boîtier décodeur ainsi que leurs données descriptives, serveur Domain Name System « DNS », serveur de fichiers ou d'impression, par exemple la version logicielle, l'adresse IP, l'adresse MAC, le ou les standards sans-fils ou filaires supportés, la ou les bandes radios supportées et/ou utilisées.

Les données collectées sont par exemple mais non limitativement la liste des connexions ou liens entre les stations et les noeuds, la liste des connexions entre les noeuds ainsi que leurs données descriptives, par exemple un horodatage, une puissance du signal ou RSSI (acronyme du terme en anglais Received Signal Strength Indicator), un niveau du bruit, un volume d'octets envoyés et/ou reçus, l'utilisation du ou des canaux radio, la bande de fréquence, le nombre de paquets transmis et/ou reçus et/ou perdus et/ou retransmis.

D'autres métriques représentatives du fonctionnement nominal de chacun des équipements, tels que les noeuds ou les stations dans le réseau local, peuvent être également envisagées. Par ailleurs, ces équipements peuvent être connectés via la technologie sans fil selon l'une des normes de la famille de standards IEEE 802.11, mais aussi une technologie de communication sans-fil basse consommation pour l'internet des objets « IoT », mais aussi une technologie de type « BlueTooth », ou une technologie d'accès filaire telle qu'Ethernet ou par courant porteur de ligne. Dans un exemple, une métrique représentative de la consommation en énergie d'un équipement peut être collectée. Dans un autre exemple, une métrique de vitesse de lien Ethernet 10 Mbps / 100 Mbps / 1000 Mbps peut également être collectée.

Les résultats du traitement des données sont envoyés par exemple dans un message selon un format JSON (acronyme de JavaScript Object Notation) ou dans un message dans un langage de balisage extensible XML (acronyme de extensible Markup Language) en utilisant un protocole de communication, tel que par exemple, le protocole HTTP (Hypertext Transfer Protocol) ou MQTT (Message Queuing Telemetry Transport).

Il est à remarquer ici que le message est envoyé à des instants prédéterminés et/ou à la demande du dispositif de détection d'incidents 10.

Chaque dispositif de conditionnement et de traitement de données 41a ou 41b comporte un module de réception, validation et d'agrégation des données 11a respectivement 11b qui reçoit et traite chaque message reçu contenant des données regroupées.

Le module de réception, validation et d'agrégation des données 11a ou 11b valide le contenu de chaque message reçu par exemple en vérifiant si le format du message reçu est conforme, si la version de référentiel est admissible, si les valeurs des informations comprises dans le message reçu sont dans une plage de valeurs cohérentes.

Dans l'affirmative, le module de réception, validation et d'agrégation des données 11a ou 11b agrège en groupes de données les données descriptives des connexions entre les stations et les noeuds et les données descriptives des connexions entre les noeuds.

Par exemple, les données sont partitionnées selon une périodicité prédéterminée, par exemple égale à 10mn.

Si, dans une partition, aucun changement de caractéristique de fonctionnement d'un lien n'apparaît, un groupe de données est formé, le groupe de données comprenant l'ensemble des données de la partition.

Dans chaque partition, à chaque changement d'au moins une caractéristique de fonctionnement d'un lien, un groupe de données est formé, qui comprend les données de la partition correspondant à la bande de fréquence, au canal et au protocole de communication. Une caractéristique de fonctionnement d'un lien est par exemple et non limitativement, la bande de fréquence, le canal et le protocole de communication tel que par exemple le protocole de communication sans-fil.

Plus précisément, un groupe de données comporte des données, pendant une durée de 10 mn, obtenues pour la bande de fréquence et le canal et le protocole de communication utilisés pendant ladite période prédéterminée. Un groupe de données comporte, pendant une durée d'utilisation de la même bande de fréquence, du même canal et du même protocole de communication utilisé, les données obtenues pour la bande de fréquence et le canal et le protocole de communication utilisés.

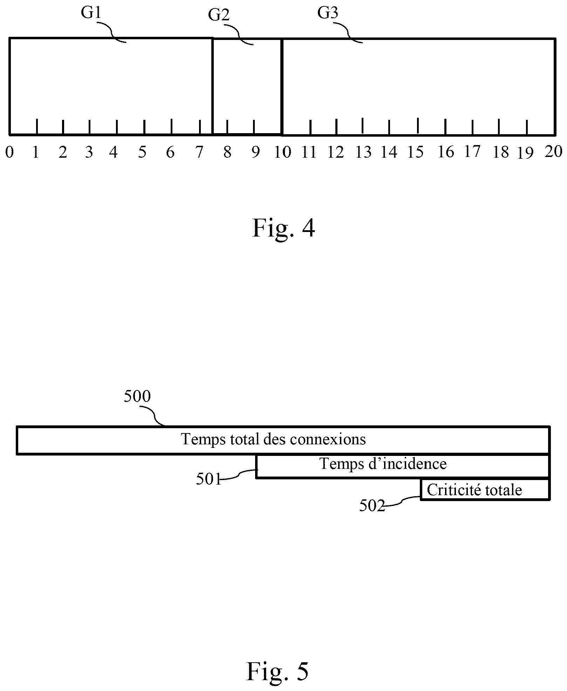

Un exemple d'agrégation est donné en référence à la Fig. 4.

La Fig. 4 illustre schématiquement un exemple d'agrégation de données selon un mode de réalisation.

Dans l'exemple de la Fig. 4, les données reçues pendant les dix premières minutes notées 0 à 9 ne sont pas obtenues pour la même bande de fréquence, pour le même canal et pour le même protocole de communication utilisé, deux groupes notés G1 et G2 sont formés.

Le groupe G1 comporte les données obtenues sur la bande de fréquence 2,4 GHz, le canal 1 et le protocole 802.11n. Le groupe G2 comporte les données obtenues sur la bande de fréquence 2,4 GHz, le canal 6 et le protocole 802.11n.

Les données reçues pendant les dix minutes suivantes notées 10 à 19 sont obtenues pour la même bande de fréquence, pour le même canal et pour le même protocole de communication utilisé. Le groupe G3 est formé.

Le groupe G3 comporte les données obtenues sur la bande de fréquence 2,4 GHz, le canal 6 et le protocole 802.11n.

Pour les plages temporelles suivantes, d'autres groupes peuvent être envisagés. Par exemple lors d'un changement de bande de fréquence de la bande dite 2,4 GHz vers la bande dite 5 GHz, et/ou lors d'un changement de norme 802.11n vers 802.11ac ou 802.11ax ou 802.11be. Les groupes servent ainsi à lisser les données envoyées par les noeuds en les agrégeant. Pour chaque groupe de données, on calcule la variation des compteurs de volumes d'octets et de paquets au sein du groupe, ainsi que le minimum, le maximum et la moyenne d'un certain nombre de métriques telles que par exemple le RSSI, le bruit...

Chaque dispositif de conditionnement et de traitement de données 41a ou 41b comporte un module de détection d'anomalies et de calcul de scores de sévérité 12a ou 12b.

Le module de détection d'anomalies et de calcul de scores de sévérité 12a ou 12b pour chaque groupe de données et chaque type d'anomalies calcule un score de sévérité, normalisé, par exemple borné entre 0 et 1 pour les différentes métriques.

Le score de sévérité permet d'évaluer l'écart de ces métriques à des valeurs prédéterminées représentatives d'un fonctionnement ou comportement normal.

Un score de sévérité de 0 signifie qu'il n'y a pas d'anomalie, un score de sévérité de 1 signifie une perturbation importante sur le lien Wi-Fi pour le groupe.

Par exemple, le score de sévérité de l'anomalie de type « couverture radio » vaut 0 pour un RSSI supérieur ou égal à -60 dBm et croît linéairement jusqu'à 1 pour un RSSI de -80 dBm et au-delà.

En effet, un niveau de RSSI à -60 dBm peut être représentatif d'une bonne qualité de réception de signal par l'une des stations dont les données relatives au RSSI sont incorporées dans l'un des groupes. Un niveau de RSSI perçu à -80 dBm est représentatif d'une réception de signal bruitée par rapport à un niveau de -60 dBm, ce qui peut induire ou dénoter une dégradation des transmissions au sein du réseau local 40 .

Par exemple, le score de sévérité de l'anomalie de type « niveau de bruit » pour un noeud vaut 0 pour un bruit inférieur ou égal à -80 dBm et croît linéairement jusqu'à 1 pour un bruit de - 60 dBm et au-delà.

Par exemple, le score de sévérité de l'anomalie de type « changement de canal » pour un noeud vaut 0 pour un nombre de changement de canal inférieur ou égal à 2 et croît linéairement jusqu'à 1 pour un nombre de changement de canal supérieur ou égal à 5 pendant une période de temps égale à 30 minutes.

Par exemple, le score de sévérité de l'anomalie de type « changement de noeud » pour une station vaut 0 pour un nombre de changement de noeud inférieur ou égal à 2 et croît linéairement jusqu'à 1 pour un nombre de changement de noeud supérieur ou égal à 5 pendant une période de temps égale à 30 minutes.

Dans les exemples ci-dessus, les scores de sévérité respectifs sont obtenus par une croissance ou interpolation linéaire présentant l'avantage de la simplicité des calculs pour un volume des données important, les comparaisons de scores de sévérités sont ainsi facilitées.

Dans d'autres exemples, les scores de sévérité respectifs sont obtenus conformément à d'autres méthodes ou modes de calcul. Par exemple, le score de sévérité de l'anomalie de type « couverture radio » est obtenu selon une table de type « lookup table » dans laquelle pour certaines valeurs de RSSI ou certaines plages de valeurs de RSSI, un score est assigné.

Cette table peut être obtenue par exemple en définissant des plages de RSSI de 3 dBm, représentatives d'un niveau de signal perçu divisé par 2 : le score 0 est assigné à la plage [-60 dBm ; -63 dBm[, le score 0,25 est assigné à la plage [-63 dBm ; -66 dBm[, le score 0.5 est assigné à la plage [-66 dBm ; - 69 dBm[, le score 0,75 est assigné à la plage [-69 dBm ; -72 dBm[, le score 0,99 est assigné à la plage [-72 dBm ; -80 dBm]. Sur cette dernière plage, le score de sévérité de 0,99 pour une couverture radio dont le RSSI est compris dans cette plage est indicateur que le niveau de réception est trop bruité pour que les transmissions à destination ou à réception de la station soient effectives.

Des scores de sévérité sont calculés pour chaque élément du réseau local.

Chaque module de détection d'anomalies et de calcul de scores de sévérité 12a ou 12b calcule ainsi, pour chaque groupe de données, un score de sévérité pour chaque type d'anomalies.

Le module de détection d'anomalies et de calcul de scores de sévérité 12a ou 12b calcule aussi des scores de sévérité pour un ou plusieurs éléments du réseau local en ne considérant que les données relatives à l'élément du réseau local.

Le module de détection d'anomalies et de calcul de scores de sévérité 12a ou 12b calcule, pour chaque groupe de données, un score de sévérité total à partir des scores de sévérité calculés pour le groupe de données.

Pour cela, des lois de composition des scores sont définies :

Une première loi d'addition : $s_1 \oplus s_2 = f_+(S_1 + S_2)$

Avec $S_1 = f_-(s_1)$, $S_2 = f_-(s_2)$,

$f_+(x) = \frac{x}{1+x}, f_-(x) = \frac{x}{1-x}$ et $\oplus$ est l'opérateur somme directe. où si est par exemple le score de sévérité pour l'anomalie de type « couverture radio » et $s_2$ est par exemple le score de sévérité pour l'anomalie de type « volume d'octets ».

Une seconde loi de multiplication $m^*s = f_+(mS)$, avec

$$S = f_-(s) \text{ et } m \in [0, \quad \infty[.$$

Le score de sévérité total $s'_i$ est donné par $\bigoplus_{i=1}^{n} s_i$, où n est le nombre d'anomalies si est le score de sévérité pour l'anomalie de type indexée par l'indice i.

L'ensemble [0; 1[ et les lois $(\oplus, *)$ possèdent la plupart des propriétés d'une structure de corps, à l'exception du fait que la loi $\oplus$ n'est pas inversible. Les fonctions $f_-$ et $f_+$ réalisent alors des homéomorphismes respectivement vers et depuis (R, +, x) garantissant les propriétés suivantes :

$$0^*s = 0$$

$$1^*s = 1$$

$$m^*1 = 1$$

$$f_-(m^*s) = m \times f_-(s)$$

$$s \oplus s = 2 * s$$

$$m_1^*(m_2^*s) = (m_1^*m_2)^*s$$

$$m^*(s_1 \oplus s_2) = (m^*s_1) \oplus (m^*s_2)$$

$$s_1 \oplus s_2 = s_2 \oplus s_1$$

$$s_1 \oplus (s_2 \oplus s_3) = (s_2 \oplus s_1) \oplus s_3$$

Ce score de sévérité totale est aussi entre 0 et 1, augmente avec les autres scores de sévérité, et est égal à un dès lors qu'un des scores de sévérité est égal à un.

Le module de détection d'anomalies et de calcul de scores de sévérité 12a ou 12b calcule aussi des scores de sévérité totale pour un ou plusieurs éléments du réseau local en ne considérant que les données relatives à l'élément du réseau local.

Les résultats fournis par le module de détection d'anomalies et de calcul de scores de sévérité 12a ou 12b ou par le module de réception, validation et d'agrégation des données 11a respectivement 11b sont transférés au dispositif de détection d'incidents 10 selon le référentiel de traitement reçu par chaque dispositif de conditionnement et de traitement de données 41a ou 41b du dispositif de détection d'incidents 10.

Le dispositif de détection d'incidents 10 comporte éventuellement un module de réception, validation et d'agrégation des données 11c qui reçoit et traite chaque message reçu comprenant des données.

Le module de réception, validation et d'agrégation des données 11c valide le contenu de chaque message reçu par exemple en vérifiant si le format du message reçu est conforme, si les valeurs des informations comprises dans le message reçu sont dans une plage de valeurs cohérentes et si le réseau local dont est issu le message fait partie de l'ensemble des réseaux locaux géré par le dispositif de détection d'incidents 10.

Le module de réception, validation et d'agrégation des données 11c agrège en groupes de données les données descriptives des connexions entre les stations et les noeuds et les données descriptives des connexions entre les noeuds de la même manière que les modules de réception, validation et d'agrégation des données 11a et 11b.

Le dispositif de détection d'incidents 10 comporte éventuellement un module de détection d'anomalies et de calcul de scores de sévérité 12c.

Le module de détection d'anomalies et de calcul de scores de sévérité 12c, pour chaque groupe de données et chaque type d'anomalies fourni par le module de réception, validation et d'agrégation des données 11a ou 11b 11c, calcule un score borné entre 0 et 1 appelé sévérité pour les différentes métriques de la même manière que les modules de détection d'anomalies et de calcul de scores de sévérité 12a et 12b.

Chaque score de sévérité et de sévérité totale reçu d'un dispositif de conditionnement et de traitement de données 41a ou 41b ou traité par le module de détection d'anomalies et de calcul de scores de sévérité 12c est mémorisé dans une base de données 13.

Le dispositif de détection d'incidents 10 comporte un module d'évaluation du fonctionnement des éléments du réseau local 15.

Le module d'évaluation du fonctionnement des éléments du réseau local 15 calcule au moins un indicateur de la santé du réseau local et/ou calcule un score de santé respectivement sur un ou plusieurs éléments sur une plage temporelle, par exemple sur une journée. Un élément est par exemple et non limitativement un noeud, un lien, etc....

Le but de l'indicateur de santé est de construire un score borné pour pouvoir comparer différents réseaux locaux et/ou différents éléments ou différentes plages temporelles sans considérations d'échelle : la santé d'un grand réseau n'a pas à être pénalisée par sa taille, il est normal d'y trouver plus d'anomalies que dans un petit réseau.

Pour un ensemble de groupes, le module d'évaluation du fonctionnement des éléments du réseau local 15 calcule la moyenne des scores de santé pondérés par la durée des groupes. Un score de santé peut être attribué à tout ensemble de groupes de données : un réseau local sur une journée.

Ce score de santé est borné entre 0 et 1, et peut donc être transformé vers n'importe quelle échelle d'indicateur de santé (ex. pourcentage, indice entre 1 et 5, etc.).

Le score de santé est calculé selon la formule suivante :

$$H = 1 - \frac{\sum_{liens} t_i \times s'_i}{\sum_{liens} t_i}$$

où t, est la durée de connexion du groupe $i$, $s'_i$ le score de sévérité totale du groupe de données.

Le module d'évaluation du fonctionnement des éléments du réseau local 15 calcule aussi des scores de santé pour un ou plusieurs éléments du réseau local en ne considérant que les scores de sévérité totale relatifs à l'élément du réseau local.

Le score de santé permet de représenter/synthétiser visuellement le niveau de santé d'un réseau local et de pouvoir le comparer à d'autres réseaux locaux. Il est par exemple utilisé par l'opérateur qui est en charge d'analyser les performances et le niveau de santé des réseaux locaux à l'échelle d'un parc d'abonnés.

Les scores de santé calculés pour des éléments du réseau local permettent de représenter/synthétiser visuellement le niveau de santé d'un élément du réseau local et de pouvoir le comparer à d'autres éléments du réseau local et/ou à des éléments d'autres réseaux locaux.

Les données calculées par le module d'évaluation du fonctionnement des éléments du réseau local 15 sont mémorisées dans la base de données 13.

Le dispositif de détection d'incidents 10 comporte un module de détection d'incidents et de calcul de scores de criticité 16.

Le module de détection d'incidents et de calcul de scores de criticité 16 effectue une analyse périodique, par exemple journalière, afin de détecter des incidents du réseau local et de proposer des recommandations adaptées.

Un incident, contrairement aux anomalies, se produit en général sur plusieurs heures, par exemple à l'échelle de la journée. En fonction du type d'incident, il peut concerner une station, par exemple lié à une utilisation par la station d'un standard vétuste, un lien radio, par exemple une mauvaise transmission de paquets, ou un point d'accès, par exemple un niveau élevé de bruit.

Chaque type d'incident est lié à un type d'anomalie. Pour déterminer s'il y a un incident, le module de détection d'incidents et de calcul de scores de criticité 16 calcule sur l'ensemble des groupes concernés la durée de connexion pondérée par la sévérité totale associée. Ce score de criticité, qui s'exprime en secondes, est appelé score de criticité totale :

$$c = \sum_{groupes} t_i \ x \ s'_i$$

où t, est la durée de connexion du groupe $i$, $s'_i$ est le score de sévérité totale de l'anomalie et la sommation est effectuée sur tous les groupes de données affectés par l'incident.

Un incident permet ainsi de voir si la criticité liée à une anomalie est problématique sur une journée : celle-ci s'étale dans le temps, avec une sévérité non nulle. On considère qu'il y a effectivement un incident si le score de criticité calculé dépasse une durée de référence, par exemple 600 secondes, soit 10 minutes d'anomalie avec sévérité maximale.

La criticité totale est la métrique privilégiée pour mesurer l'impact d'un incident sur le réseau local. Les incidents les plus graves sont ceux qui impactent le plus de liens du réseau local, le plus longtemps, le plus sévèrement. Il est parfois intéressant de considérer le temps d'incidence à la place, c'est-à-dire la durée cumulée de tous les groupes affectés par l'incident. Par construction, la criticité totale 502 est inférieure ou égale au temps d'incidence 501, elle-même inférieure au temps total de connexion sur la plage temporelle 500, comme illustré dans la Fig. 5.

Par exemple, si le score de criticité totale est supérieur à 40% de la durée totale des connexions, des actions correctives peuvent être effectuées selon le type d'incident.

Si l'utilisateur a été impacté plus de 4 heures sur un total de 10 heures de connexions, l'incident est, par exemple considéré comme relativement grave et des actions correctives peuvent être effectuées.

Le module de détection d'incidents et de calcul de scores de criticité 16 calcule aussi des scores de criticité totale pour un ou plusieurs éléments du réseau local en ne considérant que les scores de sévérité totale relatifs à l'élément du réseau local.

Le dispositif de détection d'incidents 10 comporte un module de génération d'actions correctives 14.

Le module de génération d'actions correctives 14 génère des recommandations ou des actions correctives pour améliorer le fonctionnement d'un ou plusieurs réseaux locaux. Les recommandations sont par exemple transférées au fournisseur d'accès internet du réseau local et/ou aux utilisateurs du réseau local.

Par exemple, le module de génération d'actions correctives 14 identifie le ou les réseaux locaux pour lequel ou lesquels le score de criticité totale est supérieur ou égal à un seuil prédéterminé par exemple égal à 0.4.

Les actions correctives peuvent être générées en analysant le score de santé et/ou le score de criticité totale du réseau local et/ou en analysant le score de santé et/ou le score de criticité totale d'un ou plusieurs éléments du réseau local.

Les actions correctives représentent des actions qui peuvent être automatisées sur les équipements concernés. Ainsi, le dispositif de détection d'incidents 10 identifie, à partir des scores de criticité totale, par exemple à la fin d'une journée les équipements nécessitant des optimisations et/ou changements de configuration.

Le module de génération d'actions correctives 14 ayant identifié le ou les réseaux dont le score de criticité totale et/ou le score de santé est supérieur ou égal au seuil prédéterminé génère des actions correctives en analysant les scores de sévérités mémorisés dans la journée. La liste des actions correctives est envoyée vers ces équipements en utilisant, par exemple, le protocole HTTP (Hypertext Transfer Protocol) ou MQTT (Message Queuing Telemetry Transport).

Si un incident de type couverture est détecté, par exemple, en analysant le score de santé et/ou le score de criticité totale du réseau local et/ou en analysant le score de santé et/ou le score de criticité totale d'un ou plusieurs éléments du réseau local et en analysant les scores de sévérité relatifs aux anomalies de type « faible niveau de puissance en réception d'un signal » (RSSI < -77 dBm), le module de génération d'actions correctives 14 transfère au fournisseur d'accès internet du réseau local et/ou aux utilisateurs du réseau local un message suggérant l'ajout d'un nouveau noeud (ou point d'accès) au niveau du réseau local afin d'améliorer la couverture globale du réseau local.

Par exemple, si un problème de mauvais positionnement d'un noeud est détecté, par exemple en analysant les scores de sévérité relatifs au changement de noeud ou de canal, le module de génération d'actions correctives 14 transfère au fournisseur d'accès internet du réseau local et/ou aux utilisateurs du réseau local un message invitant à déplacer un noeud, par exemple un noeud répéteur d'une passerelle internet du réseau local.

Si un incident de type changement fréquent de canal au niveau d'un noeud est détecté, par exemple, en analysant le score de santé et/ou le score de criticité totale du réseau local et/ou en analysant le score de santé et/ou le score de criticité totale d'un ou plusieurs éléments du réseau local et en analysant les scores de sévérité relatifs aux anomalies de type « changements fréquents de canal », le module de génération d'actions correctives 14 transfère au fournisseur d'accès internet du réseau local et/ou aux utilisateurs du réseau local un message suggérant aux utilisateurs et/ou aux noeuds de fixer le canal à utiliser et/ou de modifier les seuils des algorithmes locaux qui engendrent les changements de canaux.

Par exemple, si un problème de bruit est détecté, par exemple en analysant les scores de sévérité relatifs au niveau du bruit, le module de génération d'actions correctives 14 transfère au fournisseur d'accès internet du réseau local et/ou aux utilisateurs du réseau local un message invitant à déplacer voire supprimer des sources de bruit et/ou, en action corrective, un message notifiant un noeud de changer de bande de fréquence.

Si un incident de type bruit est détecté, par exemple, en analysant le score de santé et/ou le score de criticité totale du réseau local et/ou en analysant le score de santé et/ou le score de criticité totale d'un ou plusieurs éléments du réseau local et en analysant les scores de sévérité relatifs aux anomalies de type « niveau de bruit très élevé autour d'un noeud ou stations », le module de génération d'actions correctives 14 transfère au fournisseur d'accès internet du réseau local et/ou aux utilisateurs du réseau local un message suggérant aux utilisateurs et/ou aux noeuds de basculer vers un autre canal et/ou bande wifi où le niveau de bruit est moins élevé.

Par exemple, si un incident de type configuration selon une norme ou protocole non standard est détecté, par exemple, en analysant le score de santé et/ou le score de criticité totale du réseau local et/ou en analysant le score de santé et/ou le score de criticité totale d'un ou plusieurs éléments du réseau local et en analysant les scores de sévérité relative aux anomalies de type « standards vétustes utilisés », le module de génération d'actions correctives 14 transfère au fournisseur d'accès internet du réseau local et/ou aux utilisateurs du réseau local un message suggérant aux utilisateurs et/ou aux noeuds de restaurer la configuration wifi par défaut. Alternativement le module de génération d'actions correctives 14 coopère avec le dispositif de détection d'incidents 10 afin que ce dernier émette un message à destination du réseau local concerné par l'incident de type configuration norme ou protocole non standard afin qu'une mesure corrective ne soit entreprise. Cette mesure corrective peut être par exemple d'interdire une station ou terminal en rapport avec cette norme ou protocole non standard de se connecter au réseau local concerné.

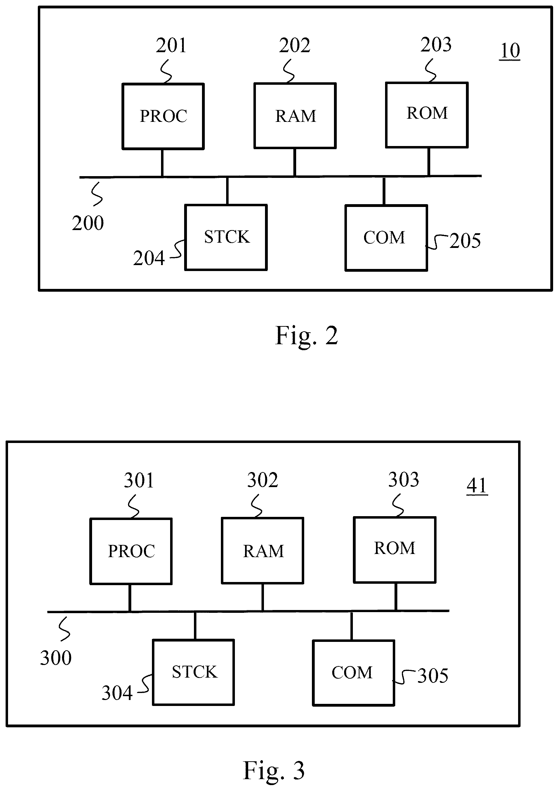

La Fig. 2 illustre schématiquement un exemple d'architecture matérielle d'un dispositif de détection d'incidents dans au moins un réseau local.

Selon l'exemple d'architecture matérielle représenté à la Fig. 2, le dispositif de détection d'incidents 10 comprend, reliés par un bus de communication 200 : un processeur ou CPU (« Central Processing Unit » en anglais) 201 ; une mémoire vive RAM (« Random Access Memory » en anglais) 202 ; une mémoire morte ROM (« Read Only Memory » en anglais) 203 ; une unité de stockage telle qu'un disque dur (ou un lecteur de support de stockage, tel qu'un lecteur de cartes SD (« Secure Digital » en anglais) 204 ; au moins une interface de communication 205 permettant au dispositif de détection d'incidents 10 de communiquer par l'intermédiaire du réseau étendu 20.

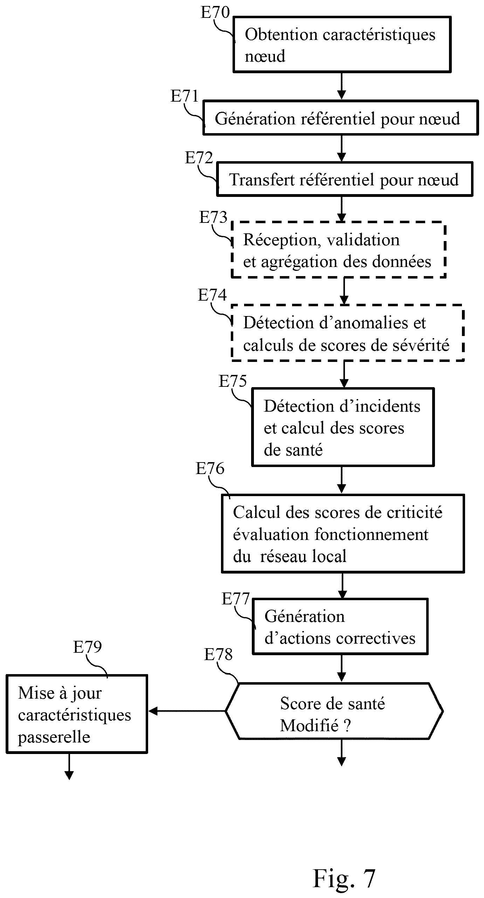

Le processeur 201 est capable d'exécuter des instructions chargées dans la RAM 202 à partir de la ROM 203, d'une mémoire externe (non représentée), d'un support de stockage (tel qu'une carte SD), ou d'un réseau de communication. Lorsque le dispositif de détection d'incident 10 est mis sous tension, le processeur 201 est capable de lire de la RAM 202 des instructions et de les exécuter. Ces instructions forment un programme d'ordinateur causant la mise en oeuvre, par le processeur 201, de tout ou partie du procédé décrit en relation avec la Fig. 7.

Le procédé décrit ci-après en relation avec la Fig. 7 peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais). En général, le dispositif de détection d'incidents 10 comprend de la circuiterie électronique configurée pour mettre en oeuvre le procédé décrit en relation avec la Fig. 7.

Il est à remarquer ici que la Fig. 2 représente une architecture matérielle d'un unique dispositif de détection d'incidents 10. Les différents éléments constitutifs du dispositif de détection d'incidents 10 peuvent être répartis dans différents dispositifs informatiques compris dans le nuage informatique.

La Fig. 3 illustre schématiquement un exemple d'architecture matérielle d'un dispositif de conditionnement et de traitement de données pour la détection d'incidents dans un réseau local.

Selon l'exemple d'architecture matérielle représenté à la Fig. 3, le dispositif de conditionnement et de traitement de données 41a ou 41b comprend, reliés par un bus de communication 300 : un processeur ou CPU (« Central Processing Unit » en anglais) 301 ; une mémoire vive RAM (« Random Access Memory » en anglais) 302 ; une mémoire morte ROM (« Read Only Memory » en anglais) 303 ; une unité de stockage telle qu'un disque dur (ou un lecteur de support de stockage, tel qu'un lecteur de cartes SD (« Secure Digital » en anglais) 204 ; au moins une interface de communication 305 permettant au dispositif de conditionnement et de traitement de données 41a ou 41b de communiquer par l'intermédiaire du réseau étendu 20.

Le processeur 301 est capable d'exécuter des instructions chargées dans la RAM 302 à partir de la ROM 303, d'une mémoire externe (non représentée), d'un support de stockage (tel qu'une carte SD), ou d'un réseau de communication. Lorsque le dispositif de conditionnement et de traitement de données 41a ou 41b est mis sous tension, le processeur 301 est capable de lire de la RAM 302 des instructions et de les exécuter.

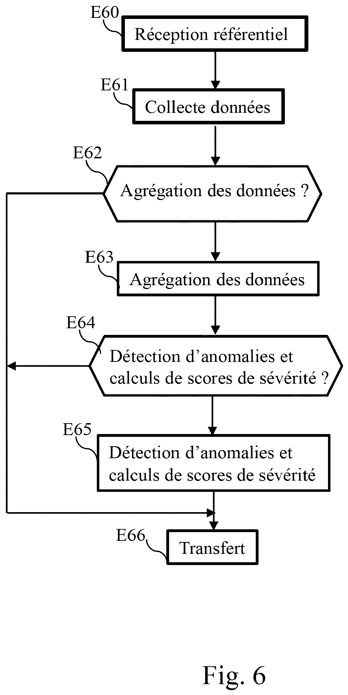

Ces instructions forment un programme d'ordinateur causant la mise en oeuvre, par le processeur 301, de tout ou partie du procédé décrit en relation avec la Fig. 6.

Le procédé décrit ci-après en relation avec la Fig. 6 peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais). En général, le dispositif de conditionnement et de traitement de données 41a ou 41b comprend de la circuiterie électronique configurée pour mettre en oeuvre le procédé décrit en relation avec la Fig. 6.

La Fig. 6 illustre schématiquement un procédé de conditionnement et de traitement de données pour la détection d'incidents dans un réseau local.

Le procédé est exécuté par chaque conditionnement et de traitement de données 41a et 41b périodiquement.

A l'étape E60, le dispositif de conditionnement et de traitement vérifie si un référentiel de traitement est disponible.

Le référentiel de traitement est par exemple transmis par le dispositif de détection d'incidents 10 ou le dispositif de conditionnement et de traitement interroge le dispositif de détection d'incidents 10 périodiquement ou à la mise sous tension du dispositif de conditionnement et de traitement.

Un référentiel de traitement comporte une liste des métriques à collecter, les fréquences d'échantillonnage selon la nature des métriques collectées (par exemple 30 s pour les métriques liées aux liens sans-fils et 30s pour les métriques systèmes), la nature des agrégations (par exemple, une moyenne et/ou une valeur maximale et/ou une valeur maximale, et une fenêtre de temps à appliquer pour l'agrégation des données (par exemple 10 min), les règles de détection d'anomalies, si le calcul des scores de sévérité associés doit être calculé, les fréquences d'envoi des données traitées.

Il est à remarquer ici que les fréquences d'envoi des métriques peuvent être différées selon la nature ou la structure de la donnée (par exemple : 30 minutes pour les données collectées périodiquement, 24h pour les données journalières).

A l'étape E61, le dispositif de conditionnement et de traitement commande la collecte et agrège les données selon les règles comprises dans le référentiel de traitement.

A l'étape E62, le dispositif de conditionnement et de traitement vérifie si le référentiel de traitement comporte des informatives relatives à l'exécution de l'agrégation des données et d'éventuelles règles à appliquer pour l'agrégation des données.

Si l'agrégation des données doit être effectuée, le dispositif de conditionnement et de traitement passe à l'étape E63. Dans la négative, le dispositif de conditionnement et de traitement passe à l'étape E66.

A l'étape E63, le dispositif de conditionnement et de traitement agrège les données selon les règles définies dans le référentiel de traitement.

A l'étape E64, le dispositif de conditionnement et de traitement vérifie si le référentiel de traitement comporte des informations relatives à l'exécution de la détection d'anomalies et de calcul de scores de sévérité. Dans l'affirmative, le dispositif de conditionnement et de traitement passe à l'étape E65. Dans la négative, le dispositif de conditionnement et de traitement passe à l'étape E66.

A l'étape E65, le dispositif de conditionnement et de traitement détecte pour chaque groupe, des anomalies en calculant le score borné entre 0 et 1 appelé score de sévérité pour les différentes métriques.

Le score de sévérité permet d'évaluer l'écart de ces métriques à des valeurs prédéterminées représentatives d'un fonctionnement ou comportement normal.

Un score de sévérité de 0 signifie qu'il n'y a pas d'anomalie, un score de sévérité de 1 signifie une perturbation importante sur le lien radio ou filaire pour le groupe.

Le dispositif de conditionnement et de traitement calcule ainsi, pour chaque groupe de données, un score de sévérité pour chaque type d'anomalies.

Le dispositif de conditionnement et de traitement calcule aussi des scores de sévérité pour un ou plusieurs éléments du réseau local en ne considérant que les données relatives à l'élément du réseau local.

Le dispositif de conditionnement et de traitement calcule, pour chaque groupe de données, un score de sévérité total à partir des scores de sévérité calculés pour le groupe de données.

Ce score de sévérité totale est aussi entre 0 et 1, augmente avec les autres scores de sévérité, et est égal à un dès lors qu'un des scores de sévérité est égal à un.

A l'étape E66, le dispositif de conditionnement et de traitement commande le transfert des données collectées à l'étape E61 ou les données agrégées à l'étape E63 ou les scores de sévérité et/ou de sévérité totale calculés à l'étape E65 selon les règles comprises dans le référentiel de traitement.

La Fig. 7 illustre schématiquement un procédé de détection d'incidents dans un réseau local. A l'étape E70, le dispositif de détection d'incidents 10 obtient pour chaque passerelle hébergeant un dispositif de conditionnement et de traitement les caractéristiques de celle-ci. Les passerelles des différents réseaux locaux ne sont pas identiques. Différents types de passerelles coexistent et n'ont pas les mêmes caractéristiques. Ces caractéristiques sont par exemple liées aux performances en puissance de calcul, en capacité de stockage de données etc. Certaines sont aptes à effectuer uniquement une agrégation de données, d'autres non, d'autres sont capable à la fois d'effectuer une agrégation de données et des calculs de score de sévérité et des calculs d'anomalies. Certaines passerelles peuvent être connectées au réseau étendu via une connexion « cuivre » utilisant une technologie « asymétrie digital subscriber line » dite « ADSL » ou « high speed digital subscriber line 2» dite « VDSL2 », d'autres passerelles peuvent être connectées au réseau étendu via une connexion par fibre optique, et encore d'autres passerelles peuvent être connectées par une liaison sans-fil de type 4G ou 5G Fixed Wireless Access « FWA ». Certaines passerelles peuvent offrir différents types de connectivité au réseau étendu.

Selon un mode particulier de réalisation, les caractéristiques d'une passerelle comportent un score de santé défini selon un mode de réalisation. Une passerelle qui est capable à la fois d'effectuer une agrégation de données et des calculs de score de sévérité et des calculs d'anomalies lorsqu'elle a un mauvais score de santé peut ne se voir attribuer qu'une quantité réduite de traitements à effectuer dans son référentiel de traitement.

Un score de santé d'une passerelle ou score de santé système, est par exemple basé sur au moins une caractéristique de la passerelle telle une utilisation du ou des ses processeurs, de sa mémoire RAM.

Ce score de santé système varie par exemple de 0% à 100%.

Un score de santé système de 0% signifie une très forte sollicitation du ou de ses processeurs, de sa mémoire RAM et d'autres ressources système qui impactent de façon significative les performances de la passerelle.

Un score de 100% montre une faible utilisation des ressources système de l'équipement pendant son fonctionnement.

Un seuil peut être appliqué pour signaler un seuil d'utilisation trop importante des ressources de l'équipement. On peut par exemple placer ce score à 50% ou 0,5 pour signaler une mauvaise santé des ressources de l'équipement.

Cette mauvaise performance du système de l'équipement est surveillée par le dispositif de détection d'incident 10. Le dispositif de détection d'incident 10, dans le cas d'un score de santé système en dessous du seuil d'utilisation, peut modifier dynamiquement le référentiel de traitement d'un équipement. Un référentiel de traitement possédant des consignes de calcul, d'agrégation allégées pourra être appliqué dans ce cas.

A l'étape E71, le dispositif de détection d'incidents 10 génère, pour chaque passerelle, un référentiel de traitement à partir des caractéristiques de celle-ci.

A l'étape E72, le dispositif de détection d'incidents 10 transfère à au moins une partie des dispositifs de conditionnement et de traitement ou met à la disposition de chaque dispositif de conditionnement et de traitement un référentiel de traitement adapté au dispositif de conditionnement et de traitement.

Lorsqu'un dispositif de conditionnement et de traitement envoie des données au dispositif de de détection d'incidents, le dispositif de détection d'incidents agrège les données à l'étape E73 comme décrit à l'étape E63 de la Fig. 6 et valide les données préalablement à l'agrégation.

Lorsqu'un dispositif de conditionnement et de traitement envoie des données agrégées, le dispositif de détection d'incidents effectue une étape E74 de détection d'anomalies et de calcul de scores de sévérité comme décrit à l'étape E65 de la Fig. 6.

A l'étape E75, le dispositif de détection d'incidents 10 calcule, à partir des scores de sévérité calculés à l'étape E74 ou reçus d'un dispositif de conditionnement et de traitement, au moins un indicateur de la santé du réseau local et/ou calcule un score de santé respectivement sur un ou plusieurs éléments sur une journée. Un élément est par exemple et non limitativement la passerelle, un noeud, un lien, etc....

Le but du score de santé est de construire un score borné pour pouvoir comparer différents réseaux locaux et/ou différents éléments ou différentes plages temporelles sans considérations d'échelle : la santé d'un grand réseau n'a pas à être pénalisée par sa taille, il est normal d'y trouver plus d'anomalies que dans un petit réseau.

Pour un ensemble de groupes, le dispositif de détection d'incidents 10 calcule la moyenne des scores de santé pondérés par la durée des groupes.

Un score de santé peut être attribué à tout ensemble de groupes de données : un réseau local sur une journée.

Ce score de santé est borné entre 0 et 1, et peut donc être transformé vers n'importe quelle échelle d'indicateur de santé (ex. pourcentage, indice entre 1 et 5, etc.).

Le score de santé est calculé selon la formule suivante :

$$H = 1 - \frac{\sum_{liens} t_i \times s'_i}{\sum_{liens} t_i}$$

où t, est la durée de connexion du groupe *i, s'ᵢ* le score de sévérité totale du groupe de données.

Le dispositif de détection d'incidents 10 calcule aussi des scores de santé pour un ou plusieurs éléments du réseau local en ne considérant que les scores de sévérité totale relatifs à l'élément du réseau local.

Le score de santé permet de représenter/synthétiser visuellement le niveau de santé d'un réseau local et de pouvoir le comparer à d'autres réseaux locaux. Il est par exemple utilisé par l'opérateur qui est en charge d'analyser les performances et le niveau de santé des réseaux locaux à l'échelle d'un parc d'abonnés.

Les scores de santé calculés pour des éléments du réseau local permettent de représenter/synthétiser visuellement le niveau de santé d'un élément du réseau local et de pouvoir le comparer à d'autres éléments du réseau local et/ou à des éléments d'autres réseaux locaux.

A l'étape E76, le dispositif de détection d'incidents 10 calcule des scores de criticité.

Le dispositif de détection d'incidents 10 effectue une analyse sur une plage temporelle, par exemple journalière, afin de détecter des incidents du réseau local et de proposer des recommandations adaptées.

Un incident, contrairement aux anomalies, se produit à l'échelle de plusieurs heures, par exemple à l'échelle de la journée. En fonction du type d'incident, il peut concerner une station, par exemple lié à une utilisation par la passerelle d'un standard vétuste, un lien radio, par exemple une mauvaise transmission de paquets, ou un point d'accès, par exemple un niveau élevé de bruit.

Chaque type d'incident est lié à un type d'anomalie. Pour déterminer s'il y a un incident, le dispositif de détection d'incidents 10 calcule sur l'ensemble des groupes concernés la durée de connexion pondérée par la sévérité totale associée. Ce score de criticité, qui s'exprime en secondes, est appelé score de criticité totale :

$$c = \sum_{groupes} t_i \; x \; s'_i$$

où t, est la durée de connexion du groupe *i, s'ᵢ* est le score de sévérité totale de l'anomalie et la sommation est effectuée sur tous les groupes de données affectés par l'incident.

Un incident permet ainsi de voir si la criticité liée à une anomalie est problématique sur une journée : celle-ci s'étale dans le temps, avec une sévérité non nulle. On considère qu'il y a effectivement un incident si le score de criticité calculé dépasse une durée de référence, par exemple 600 secondes, soit 10 minutes d'anomalie avec sévérité maximale.

La criticité totale est la métrique privilégiée pour mesurer l'impact d'un incident sur le réseau local. Les incidents les plus graves sont ceux qui impactent le plus de liens du réseau local, le plus longtemps, le plus sévèrement.

Par exemple, si le score de criticité totale est supérieur à 40% de la durée totale des connexions, des actions correctives peuvent être effectuées selon le type d'incident.

Si un élément du réseau local (passerelle, ou noeud, ou lien, ou terminal, etc.) a été impacté plus de 4 heures sur un total de 10 heures de connexions, l'incident est, par exemple considéré comme relativement grave et des actions correctives peuvent être effectuées.

Le dispositif de détection d'incidents 10 calcule aussi des scores de criticité totale pour un ou plusieurs éléments du réseau local en ne considérant que les scores de sévérité totale relatifs à l'élément du réseau local.

A l'étape E77, le dispositif de détection d'incidents 10 génère des recommandations ou des actions correctives pour améliorer le fonctionnement d'un ou plusieurs réseaux locaux. Les recommandations sont par exemple transférées au fournisseur d'accès internet du réseau local et/ou aux utilisateurs du réseau local.

Par exemple, le dispositif de détection d'incidents 10 identifie le ou les réseaux locaux pour lequel ou lesquels le score de criticité totale est supérieur ou égal à un seuil prédéterminé par exemple égal à 0.4.

Les actions correctives peuvent être générées en analysant le score de santé et/ou le score de criticité totale du réseau local et/ou en analysant le score de santé et/ou le score de criticité totale d'un ou plusieurs éléments du réseau local.

Les actions correctives représentent des actions qui peuvent être automatisées sur les équipements concernés. Ainsi, le dispositif de détection d'incidents 10 identifie, à partir des scores de criticité totale, par exemple à la fin d'une journée les équipements nécessitant des optimisations et/ou changements de configuration.

Le dispositif de détection d'incidents 10 ayant identifié le ou les réseaux dont le score de criticité totale et/ou le score de santé est supérieur ou égal au seuil prédéterminé génère des actions correctives en analysant les scores de sévérités mémorisés dans la journée.

La liste des actions correctives est envoyée vers ces équipements en utilisant, par exemple, le protocole HTTP (Hypertext Transfer Protocol) ou MQTT (Message Queuing Telemetry Transport).

Par exemple, si un problème de couverture est détecté, par exemple en analysant les scores de sévérité relatifs au niveau du changement de noeud ou de canal, le dispositif de détection d'incidents 10 transfère au fournisseur d'accès internet du réseau local et/ou aux utilisateurs du réseau local un message invitant à rapprocher une station d'un noeud ou à ajouter un noeud dans le réseau local.

Si un incident de type couverture est détecté, par exemple, en analysant le score de santé et/ou le score de criticité totale du réseau local et/ou en analysant le score de santé et/ou le score de criticité totale d'un ou plusieurs éléments du réseau local et en analysant les scores de sévérité relatifs aux anomalies de type « faible niveau de puissance en réception d'un signal » (RSSI < -77 dBm), le dispositif de détection d'incidents 10 transfère au fournisseur d'accès internet du réseau local et/ou aux utilisateurs du réseau local un message suggérant l'ajout d'un nouveau noeud (ou point d'accès) au niveau du réseau local afin d'améliorer la couverture globale du réseau local.

Par exemple, si un problème de mauvais positionnement d'un noeud est détecté, par exemple en analysant les scores de sévérité relatifs au changement de noeud ou de canal, le dispositif de détection d'incidents 10 transfère au fournisseur d'accès internet du réseau local et/ou aux utilisateurs du réseau local un message invitant à déplacer un noeud, par exemple un noeud répéteur d'une passerelle internet du réseau local.

Si un incident de type changement fréquent de canal au niveau d'un noeud est détecté, par exemple, en analysant le score de santé et/ou le score de criticité totale du réseau local et/ou en analysant le score de santé et/ou le score de criticité totale d'un ou plusieurs éléments du réseau local et en analysant les scores de sévérité relatifs aux anomalies de type « changements fréquents de canal », le dispositif de détection d'incidents 10 transfère au fournisseur d'accès internet du réseau local et/ou aux utilisateurs du réseau local un message suggérant aux utilisateurs et/ou aux noeuds de fixer le canal à utiliser et/ou de modifier les seuils des algorithmes locaux qui engendrent les changements de canaux. Dans un autre exemple, le dispositif de détection d'incidents 10 informe le ou les réseaux locaux concernés par l'incident de type changement de fréquence de canal au niveau d'un de ces noeuds pour mettre en oeuvre une action corrective. Celle-ci est par exemple de verrouiller le ou les canaux radio sur lesquels sont observés des changements fréquents.

Par exemple, si un problème de bruit est détecté, par exemple en analysant les scores de sévérité relatifs au niveau du bruit, le dispositif de détection d'incidents 10 transfère au fournisseur d'accès internet du réseau local et/ou aux utilisateurs du réseau local un message invitant à déplacer voire supprimer des sources de bruit et/ou, en action corrective, un message notifiant un noeud de changer de bande de fréquence.

Si un incident de type bruit est détecté, par exemple, en analysant le score de santé et/ou le score de criticité totale du réseau local et/ou en analysant le score de santé et/ou le score de criticité totale d'un ou plusieurs éléments du réseau local et en analysant les scores de sévérité relatifs aux anomalies de type « niveau de bruit très élevé autour d'un noeud ou stations », le dispositif de détection d'incidents 10 transfère au fournisseur d'accès internet du réseau local et/ou aux utilisateurs du réseau local un message suggérant aux utilisateurs et/ou aux noeuds de basculer vers un autre canal et/ou bande wifi où le niveau de bruit est moins élevé.

Par exemple, si un incident de type configuration selon une norme ou un protocole non standard est détecté, par exemple, en analysant le score de santé et/ou le score de criticité totale du réseau local et/ou en analysant le score de santé et/ou le score de criticité totale d'un ou plusieurs éléments du réseau local et en analysant les scores de sévérité relatifs aux anomalies de type « standards vétustes utilisés », le dispositif de détection d'incidents 10 transfère au fournisseur d'accès internet du réseau local et/ou aux utilisateurs du réseau local un message suggérant aux utilisateurs et/ou aux noeuds de restaurer la configuration wifi par défaut. Alternativement le dispositif de détection d'incidents 10 émet un message à destination du réseau local concerné par l'incident de type configuration norme ou protocole non standard afin qu'une mesure corrective ne soit entreprise. Cette mesure corrective peut être par exemple d'interdire une station ou terminal en rapport avec cette norme ou protocole non standard de se connecter au réseau local concerné.

A l'étape E78, le dispositif de détection d'incidents 10 vérifie si le score de santé déterminé pour chaque passerelle est modifié. Dans la négative, le dispositif de détection d'incidents 10 interrompt le présent algorithme.

Dans l'affirmative, le dispositif de détection d'incidents 10 passe à l'étape E79 et met à jour les caractéristiques de la passerelle en modifiant le score de santé.

## Revendications

1. Procédé de détection d'incidents dans un réseau local par un dispositif de détection d'incidents (10), le dispositif de détection d'incidents étant relié au réseau local par l'intermédiaire d'un réseau étendu, le réseau local comportant un dispositif de conditionnement et de traitement de données (41a, 41b), le procédé comporte les étapes de :

    - obtention (E60) par le dispositif de conditionnement et de traitement de données, du dispositif de détection d'incidents, d'un référentiel de traitement de données descriptives des connexions entre les stations et les noeuds et de données descriptives des connexions entre des noeuds du réseau local, une station étant un équipement fixe ou mobile utilisant les ressources du réseau local via l'intermédiaire des noeuds dudit réseau local et un noeud étant un équipement offrant des capacités de connectivité et étant constitutif du réseau local,

    - commande de la collecte des données et agrégation (E63) en groupes de données, par le dispositif de conditionnement et de traitement de données, des données descriptives des connexions entre les stations et les noeuds et les données descriptives des connexions entre les noeuds , le référentiel de traitement des données comportant des informations indiquant que les données doivent être agrégées,

    - calcul (E65), par le dispositif de conditionnement et de traitement de données, d'un score de sévérité pour chaque groupe de données et pour chaque type d'anomalies et calcul d'un score de sévérité totale pour chaque groupe de données à partir des scores de sévérité calculés pour le groupe de données si le référentiel de traitement des données comporte des informations indiquant que les scores de sévérités doivent être calculés, un groupe de données comportant, pendant une durée d'utilisation d'une même bande de fréquence, d'un même canal et d'un même protocole de communication utilisé, les données obtenues pour la bande de fréquence le canal et le protocole de communication utilisés, un type d'anomalie étant de type couverture radio ou de type niveau de bruit ou de type changement de canal ou de type changement de noeud,

    - transfert (E66), par le dispositif de conditionnement et de traitement de données, des données collectées ou des données agrégées ou des scores de sévérité au dispositif de détection d'incidents selon le référentiel de traitement pour une génération de messages de recommandations ou d'actions correctives.

2. Procédé selon la revendication 1, **caractérisé en ce que** le référentiel de traitement est déterminé par le dispositif de détection d'incidents à partir des caractéristiques du dispositif de conditionnement et de traitement de données.

3. Procédé selon la revendication 2, **caractérisé en ce que** le référentiel de traitement est déterminé par le dispositif de détection d'incidents en outre en fonction d'un score de santé du réseau local déterminé par le dispositif de détection d'incidents à partir des données agrégées ou des scores de sévérité.

4. Procédé selon l'une quelconque des revendications précédentes, **caractérisé en ce que** le procédé comporte en outre les étapes effectuées par le dispositif de détection d'incidents de :

    - calcul sur l'ensemble des scores de sévérité totale des groupes de données agrégés pendant une durée prédéterminée d'un score de criticité totale, la durée prédéterminée étant telle qu'une pluralité de groupes de données sont agrégés pendant la durée prédéterminée,

    - génération de messages de recommandations ou d'actions correctives au moins à partir du score de criticité totale.

5. Procédé selon la revendication 4, **caractérisé en ce que** le procédé comporte en outre une étape de calcul de la moyenne des scores de sévérités totales pondérés par la durée des groupes des données pour obtenir le score de santé du réseau local.

6. Procédé selon la revendication 5, **caractérisé en ce que** les recommandations ou actions correctives sont en outre générées à partir du score de santé totale.

7. Procédé selon l'une quelconque des revendications 1 à 6, **caractérisé en ce que** les données sont agrégées en partitionnant les données selon une périodicité prédéterminée, si, dans une partition, aucun changement de caractéristique de fonctionnement d'un lien n'apparaît, un groupe de données est formé, le groupe de données comprenant l'ensemble des données de la partition et dans chaque partition, à chaque changement d'au moins une caractéristique de fonctionnement d'un lien, un groupe de données est formé, qui comprend les données de la partition correspondant à la caractéristique de fonctionnement du lien.

8. Procédé selon l'une quelconque des revendications 1 à 7, **caractérisé en ce que** les recommandations sont des invitations à rapprocher une station d'un noeud du réseau local ou à ajouter un noeud dans le réseau local ou à déplacer un noeud du réseau local ou à modifier un canal à utiliser ou à modifier des seuils d'algorithmes locaux qui engendrent les changements de canaux ou à supprimer des sources de bruit ou à restaurer une configuration du protocole de communication et les actions correctives sont des modification de canaux ou des modifications de seuils d'algorithmes locaux qui engendrent les changements de canaux.

9. Dispositif de conditionnement et de traitement de données pour la détection d'incidents dans un réseau local par un dispositif de détection d'incidents, le dispositif de détection d'incidents étant relié au réseau local par l'intermédiaire d'un réseau étendu, le réseau local comportant le dispositif de conditionnement et de traitement de données, le dispositif de conditionnement et de traitement de données comporte :

- des moyens d'obtention du dispositif de détection d'incidents, d'un référentiel de traitement de données descriptives des connexions entre les stations et les noeuds et de données descriptives des connexions entre des noeuds du réseau local, une station étant un équipement fixe ou mobile utilisant les ressources du réseau local via l'intermédiaire des noeuds dudit réseau local et un noeud étant un équipement offrant des capacités de connectivité et étant constitutif du réseau local,
- des moyens de commande de la collecte des données et des moyens d'agrégation en groupes de données des données descriptives des connexions entre les stations et les noeuds et les données descriptives des connexions entre les noeuds, le référentiel de traitement des données comportant des informations indiquant que les données doivent être agrégées,
- des moyens de calcul d'un score de sévérité pour chaque groupe de données et pour chaque type d'anomalies et calcul d'un score de sévérité totale pour chaque groupe de données à partir des scores de sévérité calculés pour le groupe de données si le référentiel de traitement des données comporte des informations indiquant que les scores de sévérités doivent être calculés, , un groupe de données comportant, pendant une durée d'utilisation d'une même bande de fréquence, d'un même canal et d'un même protocole de communication utilisé, les données obtenues pour la bande de fréquence le canal et le protocole de communication utilisés, un type d'anomalie étant de type couverture radio ou de type niveau de bruit ou de type changement de canal ou de type changement de noeud,
- des moyens de transfert des données collectées ou des données agrégées ou des scores de sévérité selon le référentiel de traitement au dispositif de détection d'incidents pour une génération de messages de recommandations ou d'actions correctives.

10. Un produit programme d'ordinateur **caractérisé en ce qu'**il comprend des instructions pour implémenter, par un dispositif de conditionnement et de traitement de données, le procédé selon l'une quelconque des revendications 1 à 8, lorsque ledit programme est exécuté par un processeur du dispositif de conditionnement et de traitement de données.

11. Un support de stockage **caractérisé en ce qu'**il stocke un programme d'ordinateur comprenant des instructions pour implémenter, par un dispositif de conditionnement et de traitement de données, le procédé selon l'une quelconque des revendications 1 à 8, lorsque ledit programme est exécuté par un processeur du dispositif de conditionnement et de traitement de données.

**Patentansprüche**

1. Verfahren zur Erkennung von Störfällen in einem lokalen Netzwerk durch eine Störfallerkennungsvorrichtung (10), wobei die Störfallerkennungsvorrichtung mit dem lokalen Netzwerk mittels eines Weitverkehrsnetzes verbunden ist, wobei das lokale Netzwerk eine Vorrichtung zur Konditionierung und Verarbeitung von Daten (41a, 41b) enthält, wobei das Verfahren die Schritte enthält:

- Erhalt (E60) durch die Vorrichtung zur Konditionierung und Verarbeitung von Daten, von der Störfallerkennungsvorrichtung, eines Verarbeitungsregisters beschreibender Daten der Verbindungen zwischen den Stationen und den Knoten und beschreibender Daten der Verbindungen zwischen Knoten des lokalen Netzwerks, wobei eine Station eine ortsfeste oder mobile Ausrüstung ist, die die Ressourcen des lokalen Netzwerks mittels der Knoten des lokalen Netzwerks verwendet, und ein Knoten eine Ausrüstung ist, die Konnektivitätskapazitäten anbietet und Bestandteil des lokalen Netzwerks ist,

- Steuerung des Sammelns der Daten und Aggregation (E63) in Gruppen von Daten, durch die Vorrichtung zur Konditionierung und Verarbeitung von Daten, der beschreibenden Daten der Verbindungen zwischen den Stationen und den Knoten und der beschreibenden Daten der Verbindungen zwischen den Knoten, wobei das Verarbeitungsregister der Daten Informationen enthält, die angeben, dass die Daten aggregiert werden sollen,

- Berechnung (E65), durch die Vorrichtung zur Konditionierung und Verarbeitung von Daten, eines Schweregrad-Scores für jede Gruppe von Daten und für jede Art von Anomalie und Berechnung eines Gesamtschweregrad-Scores für jede Gruppe von Daten ausgehend von den für die Gruppe von Daten berechneten Schweregrad-Scores, wenn das Verarbeitungsregister der Daten Informationen enthält, die angeben, dass die Schweregrad-Scores berechnet werden sollen, wobei eine Gruppe von Daten während einer Verwendungsdauer eines gleichen Frequenzbands, eines gleichen Kanals und eines gleichen verwendeten Kommunikationsprotokolls die Daten enthält, die für das Frequenzband, den Kanal und das verwendete Kommunikationsprotokoll erhalten werden, wobei eine Art von Anomalie von der Art Funkversorgung oder von der Art Rauschpegel oder von der Art Kanaländerung oder von der Art Knotenänderung ist,

- Übertragung (E66), durch die Vorrichtung zur Konditionierung und Verarbeitung von Daten, der gesammelten Daten oder der aggregierten Daten oder der Schweregrad-Scores an die Störfallerkennungsvorrichtung gemäß dem Verarbeitungsregister für eine Erzeugung von Nachrichten von Empfehlungen oder von Korrekturmaßnahmen.

2. Verfahren nach Anspruch 1, **dadurch gekennzeichnet, dass** das Verarbeitungsregister von der Störfallerkennungsvorrichtung ausgehend von den Merkmalen der Vorrichtung zur Konditionierung und Verarbeitung von Daten bestimmt wird.

3. Verfahren nach Anspruch 2, **dadurch gekennzeichnet, dass** das Verarbeitungsregister von der Störfallerkennungsvorrichtung außerdem abhängig von einem Gesundheits-Score des lokalen Netzwerks bestimmt wird, der von der Störfallerkennungsvorrichtung ausgehend von den aggregierten Daten oder den Schweregrad-Scores bestimmt wird.

4. Verfahren nach einem der vorhergehenden Ansprüche, **dadurch gekennzeichnet, dass** das Verfahren außerdem die von der Störfallerkennungsvorrichtung ausgeführten Schritte enthält:

- Berechnung an der Gesamtheit der Gesamtschweregrad-Scores der Gruppen von aggregierten Daten während einer vorbestimmten Dauer eines Gesamtkritikalität-Scores, wobei die vorbestimmte Dauer so ist, dass eine Vielzahl von Gruppen von Daten während der vorbestimmten Dauer aggregiert werden,
- Erzeugung von Nachrichten von Empfehlungen oder von Korrekturmaßnahmen mindestens ausgehend vom Gesamtkritikalität-Score.

5. Verfahren nach Anspruch 4, **dadurch gekennzeichnet, dass** das Verfahren außerdem einen Schritt der Berechnung des Mittelwerts der Gesamtschweregrad-Scores gewichtet durch die Dauer der Gruppen der Daten enthält, um den Gesundheit-Score des lokalen Netzwerks zu erhalten.

6. Verfahren nach Anspruch 5, **dadurch gekennzeichnet, dass** die Empfehlungen oder Korrekturmaßnahmen außerdem ausgehend vom Gesamtgesundheit-Score erzeugt werden.

7. Verfahren nach einem der Ansprüche 1 bis 6, **dadurch gekennzeichnet, dass** die Daten aggregiert werden, indem die Daten gemäß einer vorbestimmten Periodizität partitioniert werden, wenn in eine Partition keine Änderung eines Betriebsmerkmals eines Links auftritt, eine Gruppe von Daten geformt wird, wobei die Gruppe von Daten die Gesamtheit der Daten der Partition umfasst, und in jeder Partition, bei jeder Änderung mindestens eines Betriebsmerkmals eines Links, eine Gruppe von Daten geformt wird, die die Daten der Partition entsprechend dem Betriebsmerkmal des Links umfasst.

8. Verfahren nach einem der Ansprüche 1 bis 7, **dadurch gekennzeichnet, dass** die Empfehlungen Einladungen sind, eine Station einem Knoten des lokalen Netzwerks anzunähern oder einen Knoten im lokalen Netzwerk hinzuzufügen oder einen Knoten des lokalen Netzwerks zu verschieben oder einen zu verwendenden Kanal zu verändern oder Schwellen von lokalen Algorithmen zu verändern, die die Kanaländerungen erzeugen, oder Rauschquellen zu unterdrücken oder eine Konfiguration des Kommunikationsprotokolls wiederherzustellen, und die Korrekturmaßnahmen Veränderungen von Kanälen oder Veränderungen von Schwellen von lokalen Algorithmen sind, die die Kanaländerungen erzeugen.

9. Vorrichtung zur Konditionierung und Verarbeitung von Daten für die Erkennung von Störfällen in einem lokalen Netzwerk durch eine Störfallerkennungsvorrichtung, wobei die Störfallerkennungsvorrichtung mit dem lokalen Netzwerk mittels eines Weitverkehrsnetzes verbunden ist, wobei das lokale Netzwerk die Vorrichtung zur Konditionierung und Verarbeitung von Daten enthält, wobei die Vorrichtung zur Konditionierung und Verarbeitung von Daten enthält:

    - Einrichtungen zum Erhalt der Störfallerkennungsvorrichtung eines Verarbeitungsregisters beschreibender Daten der Verbindungen zwischen den Stationen und den Knoten und beschreibender Daten der Verbindungen zwischen den Knoten des lokalen Netzwerks, wobei eine Station eine ortsfeste oder mobile Ausrüstung ist, die die Ressourcen des lokalen Netzwerks mittels der Knoten des lokalen Netzwerks verwendet, und ein Knoten eine Ausrüstung ist, die Konnektivitätskapazitäten anbietet und Bestandteil des lokalen Netzwerks ist,

    - Einrichtungen zur Steuerung des Sammelns der Daten und Einrichtungen zur Aggregation in Gruppen von Daten der beschreibenden Daten der Verbindungen zwischen den Stationen und den Knoten und der beschreibenden Daten der Verbindungen zwischen den Knoten, wobei das Verarbeitungsregister der Daten Informationen enthält, die angeben, dass die Daten aggregiert werden sollen,

    - Einrichtungen zur Berechnung eines Schweregrad-Scores für jede Gruppe von Daten und für jede Art von Anomalie und Berechnung eines Gesamtschweregrad-Scores für jede Gruppe von Daten ausgehend von den für die Gruppe von Daten berechneten Schweregrad-Scores, wenn das Verarbeitungsregister der Daten Informationen enthält, die angeben, das die Schweregrad-Scores berechnet werden sollen, wobei eine Gruppe von Daten während einer Verwendungsdauer eines gleichen Frequenzbands, eines gleichen Kanals und eines gleichen verwendeten Kommunikationsprotokolls die Daten enthält, die für das Frequenzband, den Kanal und das verwendete Kommunikationsprotokoll erhalten werden, wobei eine Art von Anomalie von der Art Funkversorgung oder von der Art Rauschpegel oder von der Art Kanaländerung oder von der Art Knotenänderung ist,

    - Einrichtungen zur Übertragung der gesammelten Daten oder der aggregierten Daten oder der Schweregrad-Scores gemäß dem Verarbeitungsregister an die Störfallerkennungsvorrichtung für eine Erzeugung von Nachrichten von Empfehlungen oder von Korrekturmaßnahmen.

10. Computerprogrammprodukt, **dadurch gekennzeichnet, dass** es Anweisungen umfasst, um das Verfahren nach einem der Ansprüche 1 bis 8 durch eine Vorrichtung zur Konditionierung und Verarbeitung von Daten zu implementieren, wenn das Programm von einem Prozessor der Vorrichtung zur Konditionierung und Verarbeitung von Daten ausgeführt wird.

11. Speicherträger, **dadurch gekennzeichnet, dass** er ein Computerprogramm speichert, das Anweisungen umfasst, um das Verfahren nach einem der Ansprüche 1 bis 8 durch eine Vorrichtung zur Konditionierung und Verarbeitung von Daten zu implementieren, wenn das Programm von einem Prozessor der Vorrichtung zur Konditionierung und Verarbeitung von Daten ausgeführt wird.

## Claims

1. Method for detecting faults in a local area network by a fault detection device (10), the fault detection device being connected to the local area network by means of a wide area network, the local area network comprising a device for conditioning and processing data (41a, 41b), the method comprises the steps of:

    - obtaining (E60), by the data conditioning and processing device, from the fault detection device, a data-processing reference frame describing the connections between the stations and the nodes and data describing the connections between nodes of the local area network, a station being a fixed or mobile item of equipment using the resources of the local area network via the nodes of said local area network, and a node being an item of equipment offering connectivity capabilities and constituting part of the local area network,

    - demanding the collection of the data and aggregating (E63) into groups of data, by the data conditioning and processing device, the data describing the connections between the stations and the nodes and the data describing the connections between the nodes, the data-processing reference frame comprising information indicating that the data must be aggregated,

    - calculating (E65), by the data conditioning and processing device, a severity score for each group of data and for each type of anomaly and calculating a total severity score for each group of data from the severity scores calculated for the group of data if the data-processing reference frame comprises information indicating that the severity scores must be calculated, a group of data comprising, during a period of use of one and the same frequency band, of one and the same channel and of one and the same communication protocol used, the data obtained for the frequency band, the channel and the communication protocol used, an anomaly type being a radio coverage type or a noise level type or a channel change type or a node change type,
- transferring (E66), by the data conditioning and processing device, collected data or aggregated data or severity scores in accordance with the processing reference frame to the fault detection device for generating recommendation messages or corrective actions.

2. Method according to claim 1, **characterised in that** the processing reference frame is determined by the fault detection device from the characteristics of the data conditioning and processing device.

3. Method according to claim 2, **characterised in that** the processing reference frame is determined by the fault detection device furthermore according to a health score of the local area network determined by the fault detection device from the aggregated data or from the severity scores.

4. Method according to any one of the preceding claims, **characterised in that** the method furthermore comprises the steps performed by the fault detection device of:

   - calculating, on all the total severity scores of the groups of data aggregated during a predetermined period, a total criticality score, the predetermined period being such that a plurality of groups of data are aggregated during the predetermined period,
   - generating recommendation messages or corrective actions at least from the total criticality score.

5. Method according to claim 4, **characterised in that** the method furthermore comprises a step of calculating the mean of the total severity scores weighted by the duration of the groups of data for obtaining the health score of the local area network.

6. Method according to claim 5, **characterised in that** the recommendations or corrective actions are furthermore generated from the total health score.

7. Method according to any one of claims 1 to 6, **characterised in that** the data are aggregated by partitioning the data according to a predetermined periodicity, if, in a partition, no change in operating characteristic of a link appears, a group of data is formed, the group of data comprising all the data of the partition and in each partition, at each change in at least one operating characteristic of a link, a group of data is formed, which comprises the data of the partition corresponding to the operating characteristic of the link.

8. Method according to any one of claims 1 to 7, **characterised in that** the recommendations are invitations to bring a station closer to a node of the local area network or to add a node to the local area network or to move a node in the local area network or to modify a channel to be used or to modify thresholds of local algorithms that cause the changes in channels or to eliminate sources of noise or to restore a configuration of the communication protocol and the corrective actions are modifications of channels or modifications of thresholds of local algorithms that cause the channel changes.

9. Data conditioning and processing device for detecting faults in a local area network by a fault detection device, the fault detection device being connected to the local area network by means of a wide area network, the local area network comprising the data conditioning processing device, the data conditioning and processing device comprises:

   - means for obtaining, from the fault detection device, a data-processing reference frame describing the connections between the stations and the nodes and data describing the connections between nodes of the local area network, a station being a fixed or mobile item of equipment using the resources of the local area network via the nodes of said local area network, and a node being an item of equipment offering connectivity capabilities and constituting part of the local area network,
   - means for demanding the collection of the data and means for aggregating into groups of data the data describing the connections between the stations and the nodes and the data describing the connections between the nodes, the data-processing reference frame comprising information indicating that the data must be aggregated,
   - means for calculating a severity score for each group of data and for each type of anomaly and calculating a total severity score for each group of data from the severity scores calculated for the group of data if the data-processing reference frame comprises information indicating that the severity scores must be calculated, a group of data comprising, during a period of use of one and the same frequency band, of one and the same channel and of one and the same communication protocol used, the data obtained for the frequency band, the channel and the communication protocol used, an anomaly type being a radio coverage type or a noise level type or a channel change type or a node change type,
   - means for transferring collected data or aggregated data or severity scores in accordance with the processing reference frame to the fault detection device for generating recommendation messages or corrective actions.

10. A computer program product **characterised in that** it comprises instructions for implementing, by a data conditioning and processing device, the method according to any one of claims 1 to 8, when said program is executed by a processor of the data processing and conditioning device.

11. A storage medium **characterised in that** it stores a computer program comprising instructions for implementing, by a data conditioning and processing device, the method according to any one of claims 1 to 8, when said program is executed by a processor of the data processing and conditioning device.

10

16

Détection d'incidents et calcul des scores de criticité

15

Evaluation fonctionnement éléments du Réseau local

14

Génération d'actions correctives

13

Base de données

12c

Détection d'anomalies et calculs de scores de sévérité

11c

Réception, validation et agrégation des données

20

40a

41a

Détection d'anomalies calculs de scores de sévérité

12a

Réception, validation et agrégation des données

11a

42a

Station

Agent local

43

42b

Station

40b

12b

41b

Détection d'anomalies calculs de scores de sévérité

11b

Réception, validation et agrégation des données

42a'

Station

42b'

Station

Fig. 1

Fig. 2

Fig. 3

G1    G2    G3

0 1 2 3 4 5 6 7 8 9 10 11 12 13 14 15 16 17 18 19 20

Fig. 4

500

| Temps total des connexions |
|---|

501

| Temps d'incidence |
|---|

502

| Criticité totale |
|---|

Fig. 5

E60 — Réception référentiel

E61 — Collecte données

E62 — Agrégation des données ?

E63 — Agrégation des données

E64 — Détection d'anomalies et calculs de scores de sévérité ?

E65 — Détection d'anomalies et calculs de scores de sévérité

E66 — Transfert

Fig. 6

E70 — Obtention caractéristiques nœud

E71 — Génération référentiel pour nœud

E72 — Transfert référentiel pour nœud

E73 — Réception, validation et agrégation des données

E74 — Détection d'anomalies et calculs de scores de sévérité

E75 — Détection d'incidents et calcul des scores de santé

E76 — Calcul des scores de criticité évaluation fonctionnement du réseau local

E77 — Génération d'actions correctives

E78 — Score de santé Modifié ?

E79 — Mise à jour caractéristiques passerelle

Fig. 7

**EP 4 199 454 B1**

## RÉFÉRENCES CITÉES DANS LA DESCRIPTION

### Documents brevets cités dans la description

- US 2020267057 A